# EUROPÄISCHE PATENTSCHRIFT

(11) **EP 0 747 252 B1**
(45) Veröffentlichungstag und Bekanntmachung des Hinweises auf die Patenterteilung: **17.03.1999**
(21) Anmeldenummer: 96108700.4
(22) Anmeldetag: 31.05.1996
(51) Int. Cl.: B60J 10/12

(54) **Deckel eines Schiebehebedaches oder Hebedaches und Werkzeug zur Herstellung eines solchen**
Panel for sliding or tilting sunroof and tool for its fabrication
Panneau pour toit coulissant ou entrebâillant et outil pour sa fabrication

(30) Priorität: 10.06.1995 DE 19521279
(43) Veröffentlichungstag der Anmeldung: 11.12.1996
(73) Patentinhaber: Webasto Systemkomponenten GmbH, 82131 Stockdorf (DE)
(72) Erfinder: Schmidhuber, Horst, 86938 Schondorf (DE); Noga, Christoph, 44534 Lünen (DE)
(74) Vertreter: Wiese, Gerhard

(56) Entgegenhaltungen:
- DE-A- 1 929 430
- DE-C- 4 106 252

## Beschreibung

Die Erfindung betrifft einen Deckel eines Schiebehebedaches oder Hebedaches zum wahlweisen Verschließen oder wenigstens teilweisen Freilegen einer in einem festen Fahrzeugdach vorgesehenen Dachöffnung, die zumindestens im Bereich ihrer Vorderkante mit einer Dichtung versehen ist. Sie betrifft ferner ein Werkzeug zur Herstellung eines solchen Deckels.

Ein Fahrzeugdach mit einem derartigen Deckel ist aus der DE-C1 34 42 653 bekannt. Bei einer Schwenkbewegung zum Ausstellen bzw. Absenken des Deckels können durch die Reibung zwischen Deckelvorderkante und der Dichtung im Bereich der Vorderkante der Dachöffnung Quietsch- oder Knarzgeräusche entstehen. Beim gattungsgemäßen Stand der Technik wird dieser Geräuschentwicklung dadurch abgeholfen, daß die Dichtung im Bereich ihrer Berührungsfläche zum Deckel mit einer reibungsmindernden Beschichtung, beispielsweise durch Aufbringen von Gleitlack, versehen ist. Dies erfordert zum einen einen zusätzlichen Arbeitsgang und einen zusätzlichen Materialaufwand und zum anderen kann eine derartige Beschichtung zum vorzeitigen Abrieb neigen.

Es ist Aufgabe der vorliegenden Erfindung, einen Deckel eines Fahrzeugdaches und ein Werkzeug zur Herstellung eines solchen bereit zu stellen, mittels dem in einfacher Weise einer Geräuschentwicklung bei einer Schwenkbewegung vorgebeugt werden kann.

Diese Aufgabe wird bezüglich des Deckels erfindungsgemäß dadurch gelöst, daß der Deckel in an sich bekannter Weise einen sich zumindestens an seiner Vorderkante - vorzugsweise jedoch über seinen gesamten Umfang - erstreckenden Rand aus Kunststoff aufweist, der an seiner der Dichtung zugewandten Vorderkante eine Oberflächen-Rauhigkeit aufweist. Die Oberflächenrauhigkeit kann sich ebenso über die gesamte umlaufende der Dichtung zugewandte Fläche des Kunststoffrandes erstrecken. Transparente Deckel für Fahrzeugdächer mit einem Rand aus Kunststoff sind prinzipiell beispielsweise aus der DE-A1 42 38 889 bekannt. Vorteilhafte Ausgestaltungen der Erfindung sind den Unteransprüchen zu entnehmen.

Durch das Vorsehen einer gezielten Oberflächen-Rauhigkeit, die beispielsweise in Form einer Narbung ausgebildet sein kann, wird der Reibungskoeffizient bzw. die spezifische Flächenpressung im Bereich der Anlage zur Dichtung derart verändert, daß keinerlei Quietsch- oder Knarzgeräusche mehr auftreten. Die mit dem Rand des Deckels zusammenarbeitende Dichtung kann eine handelsübliche Dichtung ohne zusätzliche Beschichtungen oder dergleichen sein.

In einfachster Weise läßt sich ein Rand mit gezielter Oberflächen-Rauhigkeit dadurch erzeugen, daß dieser - in an sich bekannter Weise - durch Umspritzen oder Umschäumen in einem Werkzeug hergestellt wird, dessen formgebende Oberfläche für die der Dichtung zugewandte(n) Kante(n) die Oberflächen-Rauhigkeit aufweist. Somit wird jedem Deckel bei seiner Herstellung die Oberflächen-Rauhigkeit gleich mit aufgeprägt, sodaß eine spezielle Bearbeitung nicht erforderlich ist. Die Bearbeitung erfolgt nur ein einziges Mal und zwar am Werkzeug.

Als besonders geeignetes Material zur Herstellung eines Randes hat sich Polyurethan (PU) erwiesen.

Vorteilhaft ist es, wenn die mittlere Rauhtiefe im Bereich der Vorderkante des Randes etwa 70 µm bis 90 µm beträgt.

Die Erfindung betrifft ferner ein Werkzeug zum Umschäumen oder Umspritzen eines Deckels eines Schiebehebedaches oder Hebedachs mit einem Rand aus Kunststoff, wie dies prinzipiell aus der DE-C1 41 06 252 bekannt ist, bei der erfindungsgemäß die formgebende Fläche des Werkzeugs zumindestens im Bereich der in Gebrauchslage des Deckels vorn liegenden Vorderkante mit einer Oberflächen-Rauhigkeit versehen ist. Die Oberflächen-Rauhigkeit wird vorzugsweise durch Sandstrahlen oder alternativ dazu durch Ätzen erzeugt. Die Oberflächen-Rauhigkeit am Werkzeug weist vorzugsweise eine mittlere Rauhtiefe von 70 µm bis 90 µm auf.

Durch die Erzeugung einer gezielten Oberflächen-Rauhigkeit wird einem lange bekannten Problem auf einfachste Weise abgeholfen. Obwohl die Erzeugung der Oberflächen-Rauhigkeit im Werkzeug die einfachste Möglichkeit darstellt, sollen vom Schutz auch solche Deckel umfaßt sein, bei denen die Oberflächen-Rauhigkeit nachträglich, d.h. nach Anformung des Randes, erzeugt wird.

Nachfolgend ist ein Ausführungsbeispiel der Erfindung anhand der Zeichnung beschrieben.
Es zeigt:

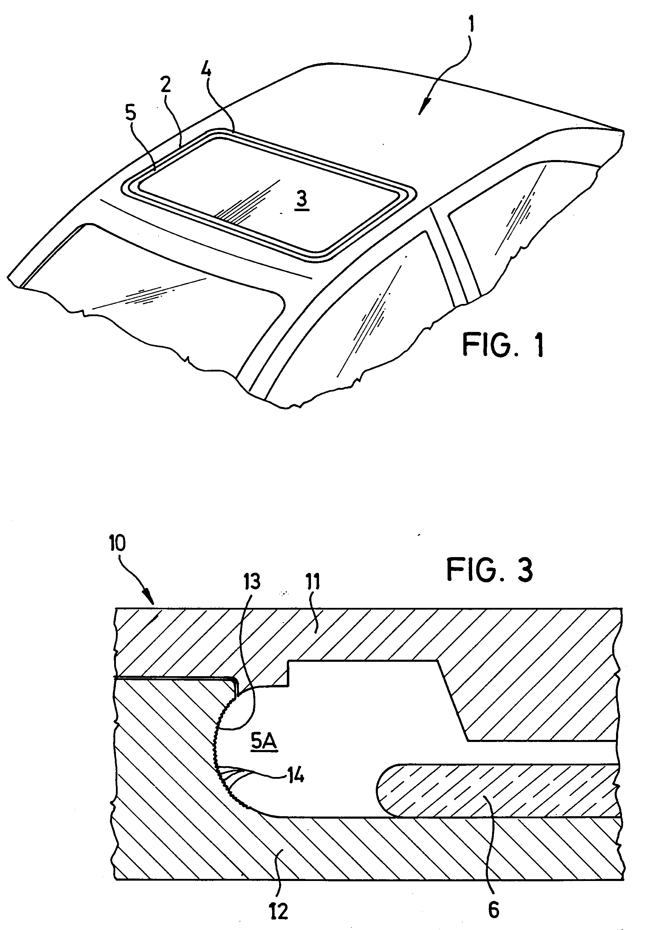

- Fig. 1: eine perspektivische Ansicht eines Fahrzeugdachs,

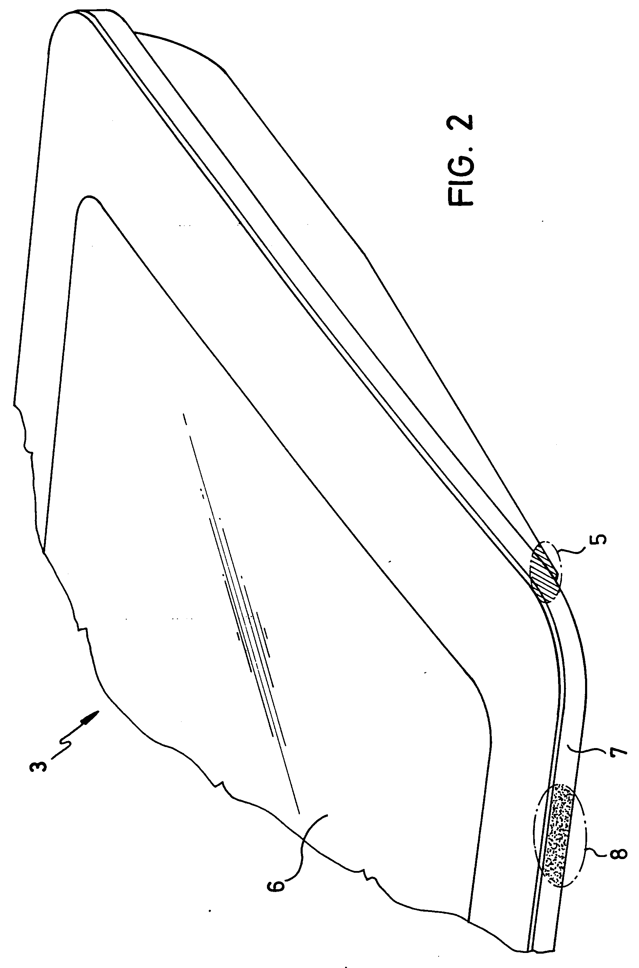

- Fig. 2: eine perspektivische Teilansicht eines Deckels und
- Fig. 3: eine Werkzeugform zur Herstellung eines Deckels.

Ein festes Fahrzeugdach 1 weist eine Dachöffnung 2 auf, die mittels eines Deckels 3 wahlweise verschließbar oder zumindestens durch Ausstellen der Hinterkante des Deckels 3 teilweise freigebbar ist. Der Rand der Dachöffnung 2 ist mit einer Dichtung 4 versehen. Die Dichtung 4 erstreckt sich vorzugsweise umlaufend um den Rand der Dachöffnung 2, es genügt jedoch zur Realisierung der vorliegenden Erfindung, wenn sich im Bereich der Deckelvorderkante eine entsprechende Dichtung 4 befindet.

Der Deckel 3 baut sich aus einer Glasplatte 6 und einem Rand 5 aus Kunststoff auf, der die Glasplatte 6 vorzugsweise an ihrem gesamten Umfang umgibt. Der Rand 5 besteht aus Polyurethan und wird durch Spritzen in einem Werkzeug hergestellt. Seine mit der Dichtung 4 im Bereich der Vorderkante der Dachöffnung 2 zusammenwirkende Vorderkante 7 weist eine Oberflächen-Rauhigkeit 8 auf, deren mittlere Rauhtiefe etwa 70 µm bis 90 µm beträgt.

Die Herstellung des Deckels 3 erfolgt in einem insgesamt mit 10 bezeichneten Werkzeug, das sich aus einem Werkzeug-Oberteil 11 und einem Werkzeug-Unterteil 12 zusammensetzt. Das Werkzeug 10 ist in Fig. 3 im leeren Zustand dargestellt; lediglich die Glasplatte 6 ist bereits in das Werkzeug-Unterteil 12 eingelegt. Der Hohlraum 5A entspricht in seiner Kontur dem nach dem Spritzvorgang gebildeten Rand 5. Eine im vorliegenden Falle am Werkzeug-Unterteil 12 vorgesehene formgebende Fläche 13 für die Vorderkante 7 des Randes 5 weist eine Oberflächen-Rauhigkeit 14 auf, die beispielsweise durch Sandstrahlen oder Ätzen erzeugt wurde. Durch das Vorsehen der Oberflächen-Rauhigkeit 14 am Werkzeug 10 wird jeder Deckel 3, der in der Werkzeugform 10 hergestellt wird, zumindestens im Bereich seiner Vorderkante 7 - vorzugsweise jedoch über den gesamten Umfang - mit einer Oberflächen-Rauhigkeit 8 versehen.

Obwohl diese unmittelbare Erzeugung einer Oberflächen-Rauhigkeit mittels eines Werkzeuges bevorzugt ist, sind vom Schutz ebenfalls solche Deckel mit umfaßt, bei denen der Rand im Bereich seiner Vorderkante nachträglich, beispielsweise durch Prägen, Sandstrahlen, Kugelstrahlen, Ätzen oder ähnliches gezielt aufgerauht wurde.

## Patentansprüche

1. Deckel (3) eines Schiebehebedaches oder Hebedaches zum wahlweisen Verschließen oder wenigstens teilweisen Freilegen einer in einem festen Fahrzeugdach (1) vorgesehenen Dachöffnung (2), die zumindestens im Bereich ihrer Vorderkante mit einer Dichtung (4) versehen ist, **dadurch gekennzeichnet**, daß der Deckel (3) in an sich bekannter Weis einen sich zumindestens an seiner Vorderkante erstreckenden Rand (5) aus Kunststoff aufweist, der an seiner der Dichtung zugewandten Vorderkante (7) eine Oberflächen-Rauhigkeit (8) aufweist.

2. Deckel (3) nach Anspruch 1, **dadurch gekennzeichnet**, daß die Oberflächen-Rauhigkeit (8) in Form einer Narbung ausgebildet ist.

3. Deckel (3) nach Anspruch 1, **dadurch gekennzeichnet**, daß der Rand (5) durch Umspritzen oder Umschäumen in einem Werkzeug (10) hergestellt wird, dessen formgebende Oberfläche (13) für die Vorderkante (7) eine Oberflächen-Rauhigkeit (14) aufweist.

4. Deckel (3) nach einem der vorhergehenden Ansprüche, **dadurch gekennzeichnet**, daß der Rand (5) aus Polyurethan (PU) besteht.

5. Deckel (3) nach einem der vorhergehenden Ansprüche, **dadurch gekennzeichnet**, daß die mittlere Rauhtiefe im Bereich der Vorderkante (7) des Randes (5) etwa 70 µm bis 90 µm beträgt.

6. Werkzeug (10) zum Umschäumen oder Umspritzen eines Deckels (3) eines Schiebehebedaches oder Hebedaches mit einem Rand (5) aus Kunststoff, **dadurch gekennzeichnet**, daß die formgebende Fläche (13) des Werkzeugs (12) zumindestens im Bereich der in Gebrauchslage des Deckels (3) vorn liegenden Vorderkante mit einer Oberflächen-Rauhigkeit (14) versehen ist.

7. Werkzeug nach Anspruch 6, **dadurch gekennzeichnet**, daß die Oberflächen-Rauhigkeit (14) durch Sandstrahlen erzeugt wird.

8. Werkzeug nach Anspruch 6, **dadurch gekennzeichnet**, daß die Oberflächen-Rauhigkeit (14) durch Ätzen erzeugt wird.

9. Werkzeug nach einem der Ansprüche 6 bis 8, **dadurch gekennzeichnet**, daß die Oberflächen-Rauhigkeit (14) eine mittlere Rauhtiefe von 70 µm bis 90 µm aufweist.

## Claims

1. A cover (3) of a sliding-lifting roof or of a lifting roof for optionally closing or at least partially exposing a roof opening (2) provided in a fixed vehicle roof (1) and which is provided with a seal (4), at least in the region of its front edge, characterised in that in per se known manner the cover (3) has a rim (5) of synthetic plastics material extending at least along its front edge and which has a surface roughness (8) on its front edge (7) which is towards the seal.

2. A cover (3) according to claim 1, characterised in that the surface roughness (8) takes the form of graining.

3. A cover (3) according to claim 1, characterised in that the rim (5) is produced by injection moulding or by foam casting in a tool (10) of which the shaping surface (13) for the front edge (7) has a surface roughness (14).

4. A cover (3) according to one of the preceding claims, characterised in that the rim (5) consists of polyurethane (PU).

5. A cover (3) according to one of the preceding claims, characterised in that the average depth of roughness in the region of the front edge (7) of the rim (5) is about 70 µm to 90 µm.

6. A tool (10) for foam casting or injection moulding of a cover (3) of a slidinglifting roof or of a lifting roof with a rim (5) of synthetic plastics material, characterised in that the shaping surface (13) of the tool (12) is provided with a surface roughness (14) at least on the region of the front edge which is in front when the cover (3) is in its position of use.

7. A tool according to claim 6, characterised in that the surface roughness (14) is produced by sand blasting.

8. A tool according to claim 6, characterised in that the surface roughness (14) is produced by etching.

9. A tool according to one of claims 6 to 8, characterised in that the surface roughness (14) has an average depth of 70 µm to 90 µm.

## Revendications

1. Panneau (3) pour toit coulissant ou entrebâillant permettant à volonté d'obturer ou de dégager au moins en partie une ouverture (2) prévue dans un toit fixe (1) et munie, au moins le long de son bord avant, d'un joint d'étanchéité,
caractérisé en ce que
le panneau (3) comporte, de manière connue en soi, une bordure (5) en matière plastique s'étendant au moins le long de sa partie avant et dont la surface de son bord avant (7), située en face du joint d'étanchéité, présente une rugosité superficielle (8).

2. Panneau selon la revendication 1,
caractérisé en ce que la rugosité (8) résulte d'un état grainé de la surface.

3. Panneau selon la revendication 1,
caractérisé en ce que
le bord (5) est obtenu par injection de matière plastique ou spongieuse à l'intérieur d'un outil (10) dont la surface (13) donnant sa forme au bord avant (7) présente une rugosité superficielle (14).

4. Panneau selon une des revendications précédentes,
caractérisé en ce que
le bord (5) est en polyuréthane (PU).

5. Panneau selon l'une des revendications précédentes,
caractérisé en ce que
la rugosité moyenne dans la zone du bord avant (7) de la bordure (5) est de 70 à 90 microns environ.

6. Outil (10) pour entourer de mousse ou de plastique injecté un panneau (3) d'un toit coulissant ou entrebâillant comportant une bordure (5) en matière plastique,
caractérisé en ce que
la surface active (13) de l'outil de moulage (12) présente au moins dans la partie où se trouve le bord avant du panneau (3), en position montée, une rugosité superficielle (14).

7. Outil selon la revendication 6,
caractérisé en ce que
la rugosité superficielle (14) est obtenue par sablage au jet.

8. Outil selon la revendication 6,
caractérisé en ce que
la rugosité superficielle (14) est donnée par attaque chimique.

9. Outil selon une des revendications 6 à 8,
caractérisé en ce que
la rugosité superficielle (14) présente une profondeur moyenne de 70 à 90 microns.
